# EUROPÄISCHE PATENTANMELDUNG

(11) **EP 0 942 142 A2**
(43) Veröffentlichungstag der Anmeldung: **15.09.1999**
(21) Anmeldenummer: 99101003.4
(22) Anmeldetag: 18.01.1999
(51) Int. Cl.: E06B 3/964

(54) **Verbindungsanordnung zweier Bauteile**

(30) Priorität: 13.03.1998 DE 29804397 U
(71) Anmelder: Niemann, Hans-Dieter, D-50169 Kerpen-Horrem (DE)
(72) Erfinder: Niemann, Hans-Dieter, D-50169 Kerpen-Horrem (DE)
(74) Vertreter: Eichler, Peter, Dipl.-Ing.

(57) **Zusammenfassung**

Die Erfindung bezieht sich auf eine Verbindungsanordnung zweier Bauteile, insbesondere eines Hohlprofilstabes (10) eines Tür- oder Fensterrahmens mit einem Querverbinder (11), bei der in einem ersten Bauteil eine Verbindungsschraube (12) mit einem Widerlager (13) gehalten und mit einer Verbindungsmutter (14) zusammengeschraubt ist, die in einem zweiten Bauteil mit einer Durchstecköffnung für die Verbindungsschraube (12) fluchtend quer in einen Einsteckschlitz hineingesteckt ist.

Um eine Verbindungsanordnung mit den eingangs genannten Merkmalen so zu verbessern, daß bei Einbau der Verbindungsmutter und beim Einschrauben der Verbindungsschraube lokale Spannungsspitzen im Einsteckschlitz bzw. im Querverbinder verhindert werden und die Verbindungsmutter in einer für das Einschrauben der Verbindungsschraube günstigen Position gehalten wird, wird sie so ausgebildet, daß die Verbindungsmutter (14) in dem Einsteckschlitz mit einem elastischen Halteteil (17) zusammengebaut ist, das die Verbindungsmutter (14) in Einschraubstellung zur durchgesteckten Verbindungsschraube (12) hält.

## Beschreibung

Die Erfindung bezieht sich auf eine Verbindungsanordnung zweier Bauteile, insbesondere eines Hohlprofilstabs eines Tür- oder Fensterrahmens mit einem Querverbinder, bei dem in einem ersten Bauteil eine Verbindungsschraube mit einem Widerlager gehalten und mit einer Verbindungsmutter zusammengeschraubt ist, die in einem zweiten Bauteil mit einer Durchstecköffnung für eine Verbindungsschraube fluchtend quer in einem Einsteckschlitz eingesteckt ist.

Eine Verbindungsanordnung mit den vorgenannten Merkmalen ist allgemein bekannt. Die Verbindungsmutter, die in einen Einsteckschlitz im Querverbinder eingesteckt ist, wird nach dem Anbau durch Anformungen desselben Materials am Einsteckschlitz gehalten. Beim Einbau belastet die Verbindungsmutter diese Anformungen. Infolgedessen kann es dabei zu großen Spannungsspitzen in verschiedenen Bereichen des Querverbinders kommen, die das Teil unerwünscht beanspruchen. Die Verbindungsmutter wird im allgemeinen im eingebauten Zustand nicht spielfrei gehalten, so daß bei dem Einschrauben der Verbindungsschraube weiterhin erneut Spannungsspitzen im Querverbinder entstehen, die häufig gegenüber denen beim Einbau verstärkt sind.

Demgegenüber liegt der Erfindung die Aufgabe zugrunde, eine Verbindungsanordnung mit den eingangs genannten Merkmalen so zu verbessern, daß bei Einbau der Verbindungsmutter und beim Einschrauben der Verbindungsschraube lokale Spannungsspitzen im Einsteckschlitz bzw. im Querverbinder verhindert werden und die Verbindungsmutter in einer für das Einschrauben der Verbindungsschraube günstigen Position gehalten wird.

Diese Aufgabe wird dadurch gelöst, daß die Verbindungsmutter in dem Einsteckschlitz mit einem elastischen Halteteil zusammengebaut ist, das die Verbindungsmutter in Einschraubstellung zur durchgesteckten Verbindungsschraube hält.

Für die Erfindung ist es von Bedeutung, daß die die Verbindungsmutter haltende Vorrichtung elastisch ist. Dies ermöglicht, daß Spannungen beim Einbau der mit dem elastischen Halteteil zusammengebauten Verbindungsmutter in den Einsteckschlitz im elastischen Material verteilt und abgefangen werden. Dies ist insbesondere bei Querverbindern aus Hartkunststoff von Bedeutung, da diese ein niedrige elastische Dehngrenze aufweisen und zu Sprödbruch neigen. Biege- oder Torsionsbelastungen bis über die Grenze des elastischen Bereiches sind die Teile aus Hartkunststoff häufig nicht gewachsen. Das elastische Halteteil bewirkt weiterhin, insbesondere bei Herstellung aus einem Material mit hoher Haftreibung, daß die Verbindungsmutter, insbesondere auch beim Transport bzw. Montieren der Bauteile, unverlierbar in einer zum Einschrauben der Verbindungsschraube günstigen Position gehalten wird. Ein bei fehlerhaftem Einbau oder sonstiger Beschädigung eventuell nötiger Ausbau der Verbindungsmutter und des elastischen Halteteils ist ohne Beschädigung des Verbindungsteils leicht möglich. Das Verbindungsteil wird nicht durch erneute Entstehung von Spannungsspitzen belastet, wie es bei der allgemein bekannten Einrichtung mit den Anformungen im Einsteckschlitz der Fall ist. Die Elastizität des Halteteils bietet die Möglichkeit, die Verbindungsanordnung abgedichtet auszubilden. Im allgemeinen Fall könnte auch ein auf eine Scheibe reduziertes Halteteil die Vorteile der Dämpfung von Spannungsspitzen und eine Abdichtung bewirken, indem man die Scheibe mit der Verbindungsmutter und schraubenschaftseitig einbaut, so daß die Verbindungsmutter bei angezogener Verbindungsschraube allenfalls schwach gegen die gegenüberliegende Seitenfläche des Einsteckschlitzes gepreßt ist, wobei mit der elastischen Scheibe auch ein Abdichtungseffekt erreicht werden kann.

Die Verbindungsanordnung kann so ausgebildet werden, daß das Halteteil im Einsteckschlitz des zweiten Bauteils die Verbindungsmutter klemmend haltend zusammengedrückt ist. Hierdurch ergibt sich ein sehr sicherer Halt der Verbindungsmutter und damit eine schnelle und zuverlässige Einschraubungsmöglichkeit der Verbindungsschraube. Die durch die Klemmung entstehenden Spannungen verteilen sich gleichmäßiger auf den angrenzenden Einsteckschlitz als in der allgemein bekannten Vorrichtung.

Es ist vorteilhaft, wenn das elastische Halteteil ein Hohlkörper ist, in den die Verbindungsmutter eingebaut ist. Das allseitige Umschließen der Verbindungsmutter ermöglicht einen sicheren Halt im Halteteil. Durch den durch das umschließende Halteteil gebildeten seitlichen Abstand ist die Verbindungsmutter gut positioniert.

Es ist vorteilhaft, wenn das Halteteil einstückig ist und eine seitlich auf die Außenabmessungen der Verbindungsmutter abgestimmte Einbauöffnung aufweist. Hierdurch ist ein zuverlässiger Zusammenbau des elastischen Halteteils und der Verbindungsmutter möglich, der in Massenfertigung gesondert erfolgen kann. Die elastische Verspannung im Halteteil gibt dem Zusammenbau einen dauerhaften Zusammenhalt. Bei einem Aufbau des Halteteils aus zwei Teilen, müßte dieses in besonderer Weise zusammengehalten werden. Die seitlich im Halteteil angeordnete Einbauöffnung für die Verbindungsmutter bewirkt eine Verformungssicherheit für den Querverbinder und eine Gestaltungsfreiheit für die Großflächen des elastischen Haltestücks, an die die Verbindungsmutter anstößt. Die Großfläche, auf die die Verbindungsschraube beim Einschraubvorgang auftrifft, kann z.B. mit einer Öffnung versehen werden. Der Durchmesser der Öffnung kann unterschiedlichen Schraubendurchmessern angepaßt werden. Die Verbindungsanordnung kann so ausgebildet werden, daß ein Hohlraum des Halteteils an den Außenumfang der Verbindungsmutter verdrehungssichernd angepaßt ist. Hierdurch ist die Verbindungsmutter beim Einschrauben der Verbindungsschraube in einer günstigen Position zur Verbindungsschraube in Einschraubstellung fest gehalten. Es ist ein schneller und sicherer Einschraubvorgang der Verbindungsschraube gewährleistet, weil die Verbindungsmutter sich nicht mitdrehen kann. Durch die speziellen Ausformungen des elastischen Haltestücks ist selbst bei hohem Kraftaufwand auf die Verbindungsschraube keine Verstellbewegung der Verbindungsmutter um die Schraubenachse möglich.

Es ist vorteilhaft, wenn die Verbindungsmutter in radialer Richtung ringsum von dem Halteteil verdrehungsgesichert umschlossen ist. Dies bewirkt eine erhöhte Sicherheit gegen ungewolltes Verdrehen durch Anliegen großer Flächen.

Es ist vorteilhaft, wenn das Halteteil durchstecköffnungsseitig mit einem Schraubenloch versehen ist. Dies ermöglicht ein zumindest widerstandsverringertes Durchschrauben der Verbindungsschraube in die Verbindungsmutter.

Es ist vorteilhaft, wenn das Schraubenloch bei eingebautem Halteteil eine den Schraubenschaft beim Durchstecken freilassende Weite hat. Hierdurch ist eine gute Positionierbarkeit der Verbindungsschraube gegeben. Die Verbindungsschraube wird zur Verbindungsmutter hin geführt und muß nicht mit Kraftaufwand durch das elastische Material des Halteteils hindurchgeschraubt werden, weil das Halteteil Abstand zum Schraubenschaft hat.

Es ist vorteilhaft, wenn das Halteteil durchstecköffnungsseitig eine Werkstoffdicke und eine Elastizität aufweist, die eine Abdichtung des Schraubenschafts bei angezogener Verbindungsschraube gestattet. Durch das Zusammenpressen des elastischen Materials zwischen Verbindungsmutter und Querverbindung wird eine Dichtung der kraftschlüssigen Verbindung der beiden Bauteile am Schraubenschaft bewirkt, so daß hierdurch keine Feuchtigkeit von dem ersten Bauteil in das zweite oder umgekehrt gelangen kann.

Es ist vorteilhaft, das Halteteil mit einer ein Herausdrücken der eingebauten Verbindungsmutter ermöglichenden Eingriffsöffnung gegenüber der Einbauöffnung zu versehen. Durch Einschieben eines Werkzeuges in diese Eingriffsöffnung ist ein einfacher Ausbau der Verbindungsmutter aus dem Halteteil und dem Querverbinder möglich, ohne daß der Querverbinder beschädigt wird. Dies ist beispielsweise bei fehlerhaftem Einbau des Halteteils von Interesse.

Die Erfindung wird anhand von in der Zeichnung dargestellten Ausführungsbeispielen erläutert. Es zeigt:
- Fig.1: einen Schnitt durch einen Hohlprofilstab mit einem Querverbinder,
- Fig.2: einen Querschnitt entlang einer Schnittlinie II II durch einen Querverbinder und
- Fig.3: ein elastisches Halteteil in perspektivischer Darstellung.

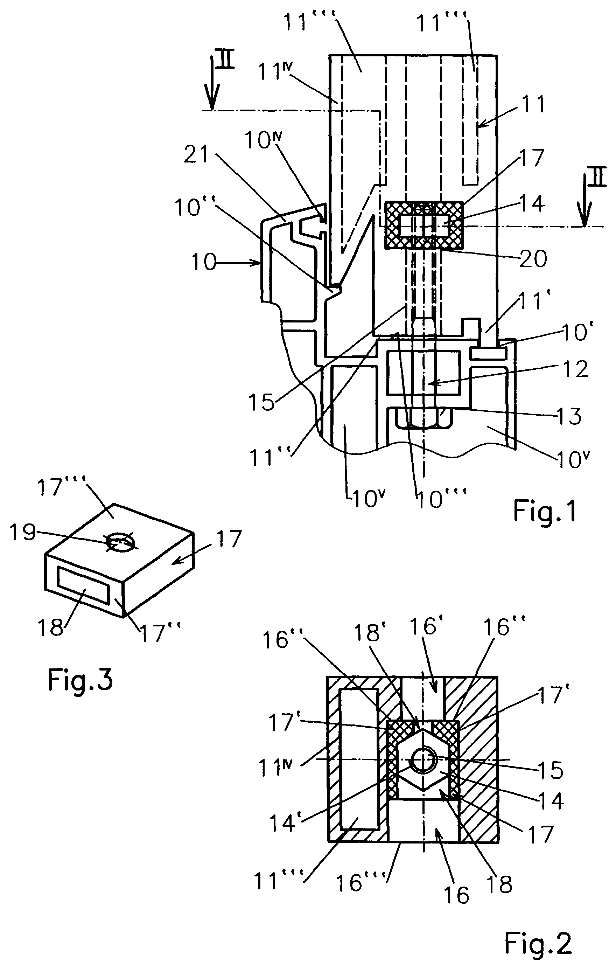

Fig.1 zeigt ein übliches beliebiges Profil, bestehend aus einem Hohlprofilstab 10 eines Tür- oder Fensterrahmens in einer beispielhaften Querschnittsgestaltung mit mehreren Kammern 10^{V}. Es ist im wesentlichen nur der üblicherweise eine Verglasung aufnehmende Profilbereich dargestellt. Ein Überschlag 21 mit einer Dichtungsaufnahmenut 10^{IV} dient üblicherweise in Verbindung mit einem nicht dargestellten elastischen Dichtungsprofil einer Außenabdichtung einer Verglasung. Der Hohlprofilstab 10 hat eine zum Überschlag 21 vertikale Abstützfläche 10''', auf der üblicherweise eine Glasfalzeinlage oder ein Glasklotz zum Abstützen einer Verglasung zum Liegen kommt. In die Abstützfläche 10''' ist eine Glasleistenhaltenut 10' eingearbeitet, mit der eine Glashalteleiste verankert werden kann, um eine Verglasung am Überschlag 21 festzulegen.

In dem vorliegenden Ausführungsbeispiel stützt sich am Hohlprofilstab 10 ein in Seitenansicht dargestelltes querverbindendes Teil aus Kunststoff ab. Dieses Teil ist ein Querverbinder 11. Es dient dem Anschluß eines nicht dargestellten weiteren Hohlprofilstabs an den Hohlprofilstab 10. Dieser nicht dargestellte Hohlprofilstab wird über den Querverbinder geschoben und dadurch quer zu seiner Längserstreckung und zur Längserstreckung des Querverbinders 11 formschlüssig festgelegt. Dabei versteht es sich, daß dieser nicht dargestellte Hohlprofilstab mit seiner dem Hohlprofilstab 10 zugewendeten Stirnfläche dessen Profilierung angepaßt sein muß, ebenso wie der Querverbinder 11. Dieser stützt sich auf einem Abstützvorsprung 10'' ab, der an dem Überschlag 21 angebracht ist. Mit einem Vorsprung 11' greift der Querverbinder 11 in die Glasleistenhaltenut 10' des Hohlprofilstabes 10 ein. Eine überwiegende Auflagefläche 11'' des Querverbinders 11 liegt jedoch auf einer Abstützfläche 10''' des Hohlprofilstabes 10 auf. Der vorzugsweise aus einem Hartkunststoff bestehende Querverbinder 11 ist nicht massiv ausgebildet, sondern hat die in Fig.1 beispielsweise durch gestrichelte Linien dargestellten Hohlräume 11'''. Diese Hohlräume 11''' sind so ausgebildet, daß sie im wesentlichen gleich starke Wandungen 11^{IV} des Querverbinders 11 ermöglichen und dabei zugleich einer Kunststoffmassen- und Gewichtsersparnis dienen. Senkrecht zu seiner Auflagefläche 11'' ist der Querverbinder 11 mit einer Durchstecköffnung 15 für eine Verbindungsschraube 12 versehen. Die Durchstecköffnung 15 führt von der Auflagefläche 11'' bis zu einem Einsteckschlitz 16, der mit Abstand zur Auflagefläche 11'' quer zur Durchstecköffnung angeordnet ist. Der Einsteckschlitz 16 ist seitlich im einstückigen Querverbinder 11 offen. Die sich an einem Widerlager 13 des Hohlprofilstabs 10 abstützende Verbindungsschraube 12 ist durch die Durchstecköffnung 15 hindurch in eine in dem Einsteckschlitz 16 mittels eines elastischen Halteteils 17 gehaltene Verbindungsmutter 14 eingeschraubt. Die Verbindungsschraube 12 verbindet den Querverbinder 11 und den Hohlprofilstab 10 kraft- und formschlüssig. Das Eingreifen des Vorsprungs 11' des Querverbinders 11 in die Glasleistenhaltenut 10' des Hohlprofilstabes 10 stabilisiert zusätzlich gegen ein seitliches Verrutschen des Querverbinders 11.

Fig.2 zeigt einen Querschnitt durch den Querverbinder 11 entlang einer abgestuften Schnittlinie II-II aus Fig.1. Der Querverbinder 11 weist an dieser Stelle den Einsteckschlitz 16 auf, in den das elastische Halteteil 17 mit der Verbindungsmutter 14 einschoben ist. Der Einsteckschlitz 16 erstreckt sich von der in Fig.2 unten dargestellten Öffnung 16''' über die Durchstecköffnung 15 hinaus und hat an der anderen Seite eine weitere Öffnung 16'. Absetzungen 16'' im Einsteckschlitz 16 stellen einen Einschubanschlag für das Halteteil 17 dar. Das elastische Halteteil 17 ist in den Einsteckschlitz 16 bis an die Absetzungen 16'' eingeschoben.

Fig.3 zeigt ein einstückiges, elastisches Halteteil 17 mit einer Einbauöffnung 18 für die Verbindungsmutter 14 und mit einem Schraubenloch 19 in perspektivischer Darstellung. Die Einbauöffnung 18 für die Verbindungsmutter 14 befindet sich in einer Seitenfläche 17'', das Schraubenloch 19 für die Verbindungsschraube 12 mittig in einer Großfläche 17''' des elastischen Halteteils 17. Die Abmessungen der Einbauöffnung 18 entsprechen denen der Verbindungsmutter 14.

Die Außenabmessungen des elastischen Halteteils 17 sind so gewählt, daß es in dem Einsteckschlitz 16 formschlüssig bzw. leicht geklemmt sitzt, siehe Fig. 2. Das Ausmaß der Klemmung wird außer durch die Außenabmessung auch durch die Elastizität des Werkstoffs des Halteteils 17 bestimmt, sowie durch die Verbindungsmutter 14, welche in die Einbauöffnung 18 eingebaut ist. Der Einbau erfolgt zweckmäßigerweise fabrikmäßig, so daß das Halteteil 17 und die Verbindungsmutter 14 eine Einbaueinheit darstellen. Die Einbaueinheit wird durch die Öffnung 16''' in den Einsteckschlitz 16 bis gegen dessen Absetzungen 16'' geschoben. Nach dem Einbau des elastischen Halteteils 17 fluchten dessen Schraubenloch 19, das Gewinde 14' der Verbindungsmutter 14 und die Durchstecköffnung 15, so daß die Verbindungsschraube 12 durch die Durchstecköffnung 15 hindurch in die Verbindungsmutter 14 eingeschraubt werden kann.

In Verlängerung zur Einbauöffnung 18 besitzt das elastische Halteteil 17 eine weitere Eingriffsöffnung 18'. Die Eingriffsöffnung 18' dient zum Herausdrücken der Verbindungsmutter 14 aus dem elastischen Halteteil 17. Das Herausdrücken erfolgt beispielsweise mit einem Schraubendreher, der durch die Öffnung 16' und die Eingriffsöffnung 18' hindurchgesteckt wird und auf die Verbindungsmutter 14 drückt. Bei einem solchen Entfernen der Verbindungsmutter 14 kann das Halteteil 17 im Querverbinder 11 bleiben, sofern die zwischen diesem und dem Halteteil 17 wirkenden Haltekräfte groß genug sind. Das elastische Halteteil 17 weist Absetzungen 17' auf, die an die Schräge der aufzunehmenden Verbindungsmutter 14 angepaßt sind.

Die Absetzungen 17' im Halteteil 17 sichern die Verbindungsmutter 14 gegen Verdrehungen beim Einschrauben der Verbindungsschraube 12. Aufgrund der Absetzungen 17' sitzt die Verbindungsmutter 14 spielfrei im elastischen Halteteil 17 und genau in einer Position, in der ihr Gewinde 14' mit dem Schraubenloch fluchtet.

Die Verbindungsschraube 12 wird durch das Schraubenloch 19 des elastischen Halteteils 17 hindurch- und in die Verbindungsmutter 14 einschraubt, siehe Fig. 1. Die Weite des Schraubenlochs 19 kann vorteilhafterweise so groß sein, daß das Einschrauben der Verbindungsschraube 12 in die Verbindungsmutter 14 nicht durch Reibung des elastischen Halteteils 17 am Schraubenschaft 20 behindert wird. Andererseits sollte das Schraubenloch 19 so eng sein, daß ein Anziehen der Verbindungsmutter 14 mit der Verbindungsschraube 12 zu einem abdichtendem Verquetschen führt, bei dem also das elastische Halteteil 17 so weit verformt wird, daß es am Schraubenschaft 20 abdichtet und infolgedessen einen Feuchtigkeitsdurchtritt durch die Durchtrittsbohrung 15 verhindert.

## Patentansprüche

1. Verbindungsanordnung zweier Bauteile, insbesondere eines Hohlprofilstabes (10) eines Tür- oder Fensterrahmens mit einem Querverbinder (11), bei der in einem ersten Bauteil eine Verbindungsschraube (12) mit einem Widerlager (13) gehalten und mit einer Verbindungsmutter (14) zusammengeschraubt ist, die in einem zweiten Bauteil mit einer Durchstecköffnung (15) für die Verbindungsschraube (12) fluchtend quer in einen Einsteckschlitz (16) hineingesteckt ist, **dadurch gekennzeichnet**, daß die Verbindungsmutter (14) in dem Einsteckschlitz (16) mit einem elastischen Halteteil (17) zusammengebaut ist, das die Verbindungsmutter (14) in Einschraubstellung zur durchgesteckten Verbindungsschraube (12) hält.

2. Verbindungsanordnung nach Anspruch 1, **dadurch gekennzeichnet,** daß das Halteteil (17) im Einsteckschlitz (16) des zweiten Bauteils die Verbindungsmutter (14) klemmend haltend zusammengedrückt ist.

3. Verbindungsanordnung nach einem oder mehreren der Ansprüche 1 und 2, **dadurch gekennzeichnet,** daß das Halteteil (17) ein Hohlkörper ist, in den die Verbindungsmutter (14) eingebaut ist.

4. Verbindungsanordnung nach einem oder mehreren der Ansprüche 1 bis 3, **dadurch gekennzeichnet,** daß das Halteteil (17) einstückig ist und eine seitlich auf die Außenabmessungen der Verbindungsmutter (14) abgestimmte Einbauöffnung (18) aufweist.

5. Verbindungsanordnung nach einem oder mehreren der Ansprüche 1 bis 4, **dadurch gekennzeichnet,** daß ein Hohlraum des Halteteils (17) an den Außenumfang der Verbindungsmutter (14) verdrehungssichernd angepaßt ist.

6. Verbindungsanordnung nach einem oder mehreren der Ansprüche 1 bis 5, **dadurch gekennzeichnet,** daß die Verbindungsmutter (14) in radialer Richtung ringsum von dem Halteteil (17) verdrehungsgesichert umschlossen ist.

7. Verbindungsanordnung nach einem oder mehreren der Ansprüche 1 bis 6, **dadurch gekennzeichnet,** daß das Halteteil (17) durchstecköffnungsseitig mit einem Schraubenloch (19) versehen ist.

8. Verbindungsanordnung nach einem oder meheren der Ansprüche 1 bis 7, **dadurch gekennzeichnet,** daß das Schraubenloch (19) bei eingebautem Halteteil (17) eine den Schraubenschaft (20) beim Durchstecken freilassende Weite hat.

9. Verbindungsanordnung nach einem oder mehreren der Ansprüche 1 bis 8, **dadurch gekennzeichnet,** daß das Halteteil (17) durchstecköffnungsseitig eine Werkstoffdicke und eine Elastizität aufweist, die eine Abdichtung des Schraubenschafts (20) bei angezogener Verbindungsschraube (12) gestattet.

10. Verbindungsanordnung nach einem oder mehreren der Ansprüche 1 bis 9, **dadurch gekennzeichnet,** daß das Halteteil (17) eine ein Herausdrücken der eingebauten Verbindungsmutter ermöglichende Eingriffsöffnung (18') gegenüber der Einbauöffnung (18) aufweist.
